# EUROPEAN PATENT SPECIFICATION

(11) **EP 3 084 160 B1**
(45) Date of publication and mention of the grant of the patent: **07.03.2018**
(21) Application number: 14793466.5
(22) Date of filing: 20.10.2014
(51) Int. Cl.: F01N 3/20

(54) **UREA DELIVERY SYSTEM FOR SCR SYSTEM**
HARNSTOFFABGABESYSTEM FÜR EIN SCR-SYSTEM
SYSTÈME DE DISTRIBUTION D'URÉE POUR SYSTÈME SCR

(30) Priority: 19.12.2013 GB 201322576
(43) Date of publication of application: 26.10.2016
(73) Proprietor: Delphi International Operations Luxembourg S.à r.l., 4940 Bascharage (LU)
(72) Inventor: SYKES, Martin, Rainham Kent ME8 ORB (GB); SPADAFORA, Peter, L8023 Strassen (LU)
(74) Representative: Delphi France SAS
(86) International application number: PCT/EP2014/072407
(87) International publication number: WO 2015/090677

(56) References cited:
- EP-A1- 2 192 280
- JP-A- 2012 007 511
- KR-A- 20130 014 235
- US-A1- 2010 242 439

## Description

### FIELD OF THE INVENTION

The present invention generally relates to exhaust purification by means of a urea Selective Catalytic Recovery System. More particularly, the invention relates to a urea delivery system for such SCR system.

### BACKGROUND OF THE INVENTION

SCR catalysts remove nitrogen oxides (NOx), often the most abundant and polluting component in exhaust gases, through a chemical reaction between the exhaust gases, a reducing agent, and a catalyst.

Urea-based SCR catalysts use gaseous ammonia as the active NOx reducing agent. Typically, an aqueous solution of urea, also known as carbamide ((NH₂)₂CO), is carried on board of a vehicle, and a dosing valve is used to supply it into the exhaust gas stream entering the SCR catalyst where it decomposes into gaseous ammonia (NH3) and is stored in the catalyst. The NOx contained in the engine exhaust gas entering the catalyst then reacts with the stored ammonia, which produces nitrogen and water.

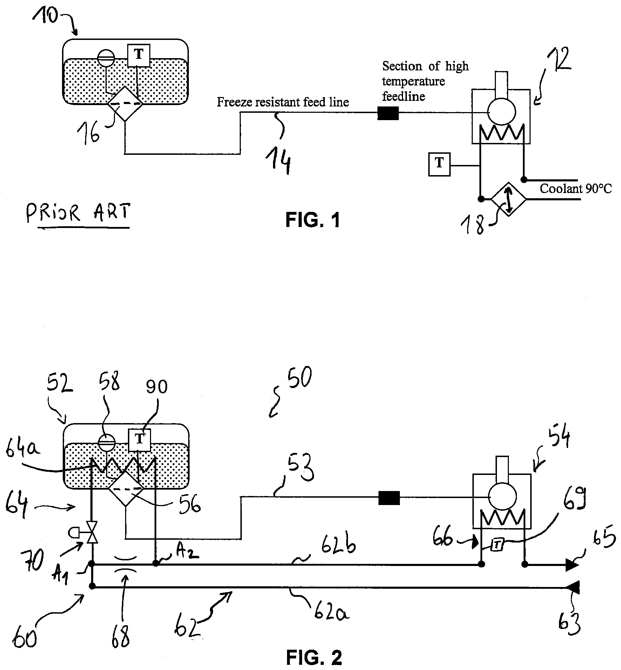

A conventional SCR system will now be explained with reference to Fig.1. Reference sign 10 indicates a urea storage tank onboard a vehicle, from which the urea is transported to a dosing valve 12 by a feed line 14. The urea is then introduced by the dosing valve into the internal combustion engine's exhaust piping, upstream of the SCR catalyst.

A critical aspect of SCR systems is that the urea solution used as reducing agent freezes at moderate negative temperatures, e.g. -11°C. Obviously, freezing of the urea solution compromises the operation of the whole system and may incur serious damages. Therefore, countermeasures to heat-up the urea delivery system have been developed so that the urea solution can be thawed or can be kept in liquid form in the hydraulic SCR components while the engine is running, and this under any weather conditions.

In the system of Fig.1, the urea delivery module (UDM) 16 associated with the tank 10 includes an electrical heater in addition to a filter, level sensor and temperature sensor. This electrical heater thus allows thawing frozen urea in the tank. The feed line 14 is also typically elecrically heated. This is only one configuration, while various system configurations may exist where hydraulic components are heated electrically or by engine coolant.

Complete thawing of a urea tank can be difficult to achieve when a vehicle is used for repeated short journeys. This is known as the 'working day cycle'. The WDC represents a short journey (less than 1 hour) in the morning to work and a repeated journey home at the end of the day. The urea in the tank freezes in between each journey. The issue can be that an electrical heater fitted in the UDM may thaw a small volume of urea which is then used and contact between the heater and the urea is lost and further thawing is impossible.

While additional heat is desired to thaw frozen urea, some cooling is desirable at the dosing vave to prevent the supply of urea from boiling during hot running conditions. The normal engine coolant system runs at a temperature too high to be used directly. In engines where an alternative low temperature coolant is not provided then an additional cooler 18 is required, as shown in Fig.1, in order to cool down the engine coolant before entering the dosing valve 12. This leads to additional cost and issues with installation into a vehicle.

US 2010/242439 A1 and JP 2012 007511 A disclose SCR systems comprising a coolant loop with two parallel cooling water circulation passages. One cooling water circulation passage flows from the engine through the urea tank and back to the engine. The second cooling water circulation passages flows from the engine through a doser section and back to the engine.

### OBJECT OF THE INVENTION

The object of the present invention is to provide an alternative urea/reductant delivery system for an SCR system of improved design.

### SUMMARY OF THE INVENTION

The present invention concerns a reductant delivery system for a SCR system in an internal combustion engine, comprising:
- a reductant tank for storing reductant solution;
- a dosing valve for dosing reductant solution into the engine's exhaust line, the dosing valve being connected to said reductant tank via a feed line; and
- a coolant loop (or coolant circuit) having an inlet at one end for receiving hot engine coolant, generally from the engine block, and an outlet at the other end for returning(discharging) the engine coolant.

It shall be appreciated that the coolant loop comprises:
- flow restrictor means dividing the coolant loop in an upstream, first section on said inlet side, and a downstream, second section;
- a tank loop branching from the coolant loop upstream and downstream of the flow restrictor means and partly located in the reductant tank for thawing frozen reductant solution;
- a doser section downstream of the tank loop to carry engine coolant of said second section and arranged in thermal exchange relationship with the dosing valve for cooling thereof;
- valve means operable to allow or stop the flow of engine coolant through the tank loop.

The system according to the present invention is of simple design while providing many benefits, and suppressing the need for an electrical heater in the storage tank. As it will be appreciated, the coolant loop structure of the present system achieves two functions through a simple design:
- thawing frozen urea solution in tank; and
- cooling the dosing valve.

The normal engine coolant is used for both these functions, which can be selected by operating the valve means in the proper position.

The inventive system may thus be operated in the following modes, depending on the operating state of the valve means:
- Tank heating mode: the valve means is open. The flow of engine coolant through the tank loop is allowed, so that hot engine coolant (from the engine block/normal engine coolant circuit) flows through the storage tank in order to thaw frozen urea and/or maintain it in liquid form.
- Bypass mode: the valve means is closed. The storage tank is bypassed and the entirety of the engine coolant flows through the flow restrictor only. Here the flow restriction opposed by the flow restrictor causes a heat loss over the length of the coolant loop, so that coolant flow into the dosing valve is below required limits. The dosing valve can thus be cooled by the engine coolant, in order to avoid or limit boiling of reductant solution. No extra heat exchanger is required to cool down the engine coolant.

As it will be understood, the use of hot engine coolant as a thawing medium in the storage tank, as in the present invention, allows bringing substantially more heat than prior art solutions using an electrical heater. This is clearly beneficial for thawing the tank during short journey. In this context, the section of tank loop passing in the tank (and in thermal exchange with the reductant solution through the tank loop piping wall) can have any appropriate shape: e.g. straight, square, curved, serpentine, or helical shape, or combinations thereof. The tank loop section can also be integrated in the reductant tank itself.

If desirable, various routings of the tank loop portion located in the tank can be envisaged:
- the tank loop portion can be configured to route the engine coolant to the top of the tank in order to thaw the liquid surface and prevent the creation of voids in the frozen block of urea solution;
- Routing the engine coolant from the side minimizes the tank height. The absence of electrical heater allows a more compact design of the reductant tank, and the hydraulic connections could be arranged on the side of the tank.
- From bottom near filter: ensures thawing of the filter region first.

Depending on the operating mode, the flow through the coolant loop is thus different:
- a restricted flow exists in bypass mode, due to the flow restrictor means, and calibrated to provide a desired cooling of the engine coolant flow for the purpose of cooling the dosing valve.
- a larger flow exists in tank heating mode, to carry a greater amount of heat to the storage tank.

The bypass mode is preferably the default position. Depending on the valve means configuration, the flow of engine coolant through the flow restrictor means in heating mode any or may not be allowed.

The valve means may be arranged in the tank loop. In such case the flow of engine coolant through the flow restrictor means is allowed also in tank heating mode.

The valve means may comprise a two-port valve to stop or allow the flow of coolant on the branch going into or out of the tank. Alternatively a four-port valve (e.g. heater-type control valve) may be employed to control the flow of coolant in the in-flow and out-flow branches of the tank loop.

In another embodiment, the valve means may comprise a three-port valve connected in the coolant loop to either direct the flow of engine coolant from the first section to the second section through the flow restrictor means or through the tank loop, or possibly through both. The three-port valve offers the possibility of controlling the flow through each branch, i.e. the flow through the flow restrictor can actually be stopped. In this case also, the flow restrictor means may be integrated in one port of the three-way valve.

Any appropriate actuating device, e.g. a solenoid actuator, may perform valve means actuation. The actuating device may be triggered by a control unit, e.g. the ECU, based on measured signals, e.g. based on the measured outside temperature and/or temperature of the reductant solution. The valve can however also be controlled by an integrated temperature-sensitive control module.

Alternatively, the valve can be of the mechanical-thermostatic type, i.e. the mechanical design of the valve is temperature sensitive and the valve member blocks or allows the flow through the valve in response to temperature, without external control.

As it has been understood, the flow restrictor defines a comparatively smaller cross section than the piping of the remainder of the coolant loop. The flow restrictor is advantageously optimised to give the desired flow rate through the dosing valve, and is normally designed as a compromise between low flow at low engine speeds and high flow at high engine speeds.

It remains to be noted that the present delivery system is advantageously meant to exploit directly the engine coolant, whereby the inlet and outlet of the coolant loop are connected very close to the engine block (main engine body). The coolant loop of the present reductant delivery system thus forms a branch of the engine's conventional coolant circuit. A dedicated water pump is not required in the present coolant loop, since a forced flow of engine coolant is already obtained by the engine's water pump.

According to another aspect, the present invention concerns a SCR system for an internal combustion engine comprising a SCR catalyst arranged in an exhaust line of said engine as well as a reductant delivery system as described above.

According to still another aspect, the present invention concerns an automotive vehicle having an internal combustion engine comprising an exhaust piping equipped with an SCR catalyst and a reductant delivery system as described above, wherein the coolant loop piping of the reductant delivery system extends along the length of the car. In this connection, the engine may be at the front end, and the reductant tank located towards the rear end of the car, as well as the flow restrictor means, so that the engine coolant flows through the first section of the coolant loop from front to rear, and from rear to the dosing valve.

### BRIEF DESCRIPTION OF THE DRAWINGS

The present invention will now be described, by way of example, with reference to the accompanying drawings, in which:
FIG. 1: is a diagram of a conventional reductant delivery system;
FIG. 2: is a diagram of a first embodiment of the present reductant delivery system; and
FIGS. 3 to 5: are diagrams of other embodiments of the present reductant delivery system.

### DETAILED DESCRIPTION OF A PREFERRED EMBODIMENT

The present reductant delivery system is used in a Selective Catalytic Recovery system in an internal combustion engine. SCR systems are well-known exhaust purification systems and will not be explained herein in detail. In Brief, a SCR system comprises a SCR catalyst arranged in the exhaust pipe, typically downstream a Diesel particulate filter (DPF). The SCR catalyst uses gaseous ammonia as active NOx reducing agent.

Therefore, a dosing valve is used to supply a reductant solution (ammonia precursor, e.g. carbamide or AdBlue®) into the exhaust gas stream entering the SCR catalyst where it decomposes into gaseous ammonia (NH₃) and is stored in the catalyst. The NOx contained in the engine exhaust gas entering the catalyst then reacts with the stored ammonia, which produces nitrogen and water.

Referring now to Fig.2, there is shown a principle diagram of a first embodiment 50 of the present reductant delivery system. Reference sign 52 indicates a reductant tank for the storage of a reductant solution, typically a urea solution, e.g. AdBlue®. Tank 52 itself may be a recipient made from any appropriate synthetic material, and closed by a fluid supply cap. The urea solution is carried from tank 52, through a feed line 53, to a dosing valve, generally indicated 54, which is positioned to inject the urea solution into an internal combustion engine exhaust piping, upstream of a SCR catalyst (not shown). The dosing valve 54 is controlled by the ECU to deliver desired amounts of urea solution in the exhaust piping.

A distributor module 56 may be connected at the bottom of the tank 52 and features an integrated level sensor 58 and a temperature sensor 90, as well as a filter (not shown) and a connection port for the feed line 53. Such distributor module 56 may be similar to the know urea distributor module 16 shown in Fig.1, with the exception of a heater unit that is no longer needed, as will be explained below. In some instances, the distributor module 56 may comprise a pump, but this is not required in the present instance where the dosing valve 54 preferably includes a pump to suck urea from the tank.

It shall be appreciated that the reductant delivery system 50 comprises a coolant loop 60 designed so as to use the engine coolant for two purposes:
- thawing frozen urea solution in tank 52; and
- cooling the dosing valve 54.

Coolant loop 60 is designed as a coolant circulation piping 62, or piping loop, having an inlet 63 at one end for receiving engine coolant and an outlet 65 at the other end for returning the coolant fluid to the engine. The inlet 63 and outlet 65 are generally located very close to the engine block. In practice, the present coolant loop 60 is thus connected to the normal engine coolant circuit, and takes a flow thereof through inlet 63 and returns it through outlet 65. A water pump (not shown) may be located before the inlet 63 or in the coolant loop. This is however not required in the shown embodiments, where the forced flow operated by the engine's water pump is considered sufficient.

Reference sign 68 indicates a flow restrictor in the coolant loop 60 that divides the piping circuit 62 in an upstream, first section 62a on the inlet side, and a downstream, second section 62b. This flow restrictor 68 is thus serially connected in the piping circuit 62 and can be embodied as an orifice or as a piping section defining a reduced cross-section of flow, as compared to the upstream section 62a.

A tank loop 64 branches off the coolant loop 60 upstream and downstream of the flow restrictor 68, at points A1 and A2, to detour around the flow restrictor 68, and passes through the reductant storage tank 52. The tank loop portion 64a located inside the tank 52 can take any desired form; in Figs. 2-5 section 64a has a serpentine shape.

A doser section 66 is provided downstream of the tank loop 64, to carry engine coolant from the second loop section 62b and is arranged in thermal exchange relationship with the dosing valve 54, for cooling the latter. Contrary to the tank loop 64, the dosing section does not branch from the coolant piping 62 but is preferably serially connected with the second section 62b (or integral part thereof). Here again, the portion of the doser section 66 in heat exchange relationship with the dosing valve 54 may take any appropriate shape, as for the tank loop. Reference sign 69 designate a temperature sensor in the doser section, before the dosing valve 54.

As it will be understood, when the present system is installed on a car, a flow of engine coolant is thus routed from the engine block (at the front) to the back of the car, where the urea tank is located, and back to the engine, via the dosing valve.

Coolant loop 60 further includes a valve 70 operable to allow or stop the flow of engine coolant through the tank loop 64. In the embodiment of Fig.1, the valve 70 is a two-port control valve with electric actuator, so that it can be remotely actuated by a control unit, e.g. the ECU. Valve 70 is installed in the tank loop and hence allows stopping or permitting the flow of engine coolant through the tank loop 64.

The present reductant distribution system 50 may then be operated in the following modes, depending on the position of the valve member in the control valve:
▪ **Tank heating mode.** The system is operated in a tank heating mode, wherein valve 70 is open to allow the flow of engine coolant trough the tank loop 64 and hence through the reductant tank 52.
▪ **Bypass mode.** When the valve is closed, the tank 52 is bypassed and the entirety of the engine coolant flows through the flow restrictor 68 only.

With the tank bypassed, the entirety of the engine coolant flows through the flow restrictor 68. The flow restriction opposed by the flow restrictor causes a heat loss over the length of piping 62, which is determined by design. In particular, the dimensions of the piping 62 as well as the flow cross section defined by the restrictor 68 allows designing a coolant loop 60 with predetermined temperature drop of the engine coolant. In particular, the heat loss over the length of the piping 62 is designed to be enough to ensure that the coolant flow into the dosing valve 54 is below required limits. As it will be understood, coolant routing would be exposed to ambient temperatures and air flow under the vehicle. Optionally a finned pipe may be used on all or part of the coolant piping (e.g. part between valve and tank loop return).

In Tank heating mode (valve 70 is open), the flow is not restricted. That is, a greater flow rate of engine coolant circulates through the coolant loop 60 since engine coolant flows through both the tank loop 64 and the flow restrictor 68. This maximizes the heat into the tank 52 and also ensures that the coolant flow into the dosing valve 54 is cool, but not too cold. Frozen reductant solution can be rapidly thawed and maintained in liquid form. An electric heater is no longer required in the tank, contrary to the prior art system shown in Fig1.

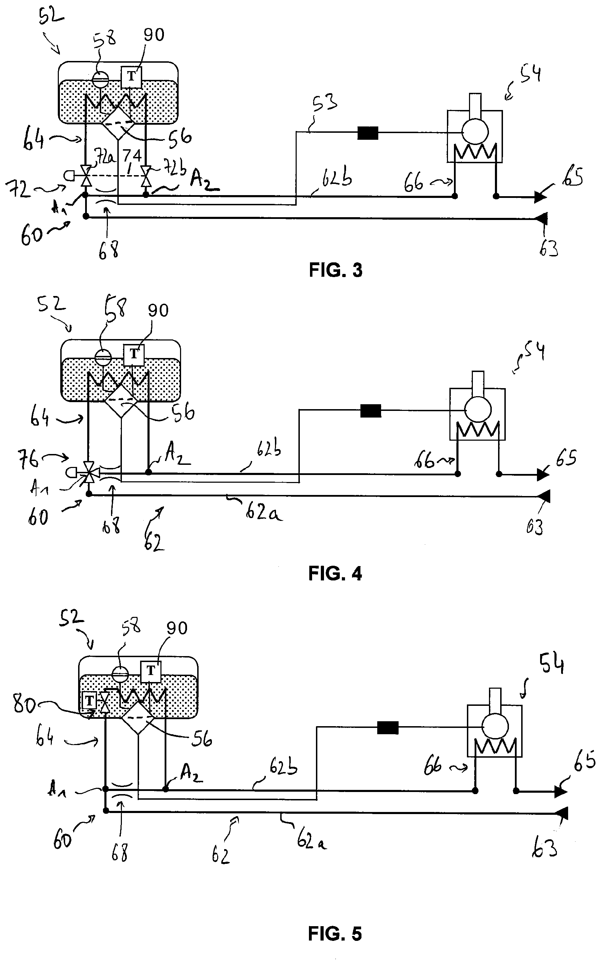

Furthermore, in order to still save on electric heating, a section of the coolant loop can be located in close proximity to the feed line. For example, the coolant return line (second section 62b) can be in close proximity to the feed line 53 so that the heat dissipated heats up the feed line 53. Such an arrangement of the feed line 53, saving on costs and simplifying the system, is e.g. shown in Fig.3.

A variety of valve types can be used, as will now be discussed in relation to Figs.3 to 5, where the system configuration is similar to that of Fig.2, except for the valve type and for the feed line being arranged close to the coolant loop. Same reference signs designate identical or similar elements,

The system of Fig.3 uses, instead of a simple two-port valve 70, a four-way valve 72 (or similar), where ports are paired by two so as to form two inner channels in a same body, through which the flow is allowed or stopped by the same valve member. This is materialised in Fig.3 by the dashed line 74 linking one channel 72a on the flow stream from the first section to the tank, while the second channel 72b on the flow from the tank to the second section 62b.

In the embodiment of Fig.4, a three-port valve 76 is arranged towards the end of the first section 62a and allows a full control of the flow by allowing directing the engine coolant from the first section 62a to the flow restrictor 68, or to the tank loop 64, or possibly through both.

In the embodiments of Figs. 2 to 4 each valve, or control valve, has an actuator that allows operating valve position to circulate the engine coolant through the tank loop or not, typically depending one or more measured parameters. For example the opening of the control valve can be decided based on the outer temperature and/or on the temperature measured inside the storage tank.

In the alternative embodiment of Fig.5, the valve 80 is of the thermostatic type, so that at least the temperature sensitive portion thereof is located inside or in heat-exchange relationship with the tank 52. In Fig.5 the valve 80 is located inside the tank. When the temperature drops below a predetermined value, as sensed by the valve 80, it opens and engine coolant is allowed to flow through the tank loop section inside the tank 52.

In practice, the coolant loop 60 may consist of a piping circuit 62 of substantially constant cross-section. The flow restrictor 68 is serially connected in the piping circuit 62 and defines a comparatively reduced cross section of flow.

In general, the flow restrictor 68 is advantageously optimised to give the desired flow rate through the dosing valve, and is normally designed as a compromise between low flow at low engine speeds and high flow at high engine speeds. In this connection, the flow rate through the coolant loop in "bypass mode" (i.e. via flow restrictor only) may be between 0.1 to 0.3, preferably 0.1 to 0.2, times the flow rate in "heating mode", in particular at idle. As regards more particularly the flow cross-sections, the ratio of the flow restrictor diameter over the flow cross section in the remained of the coolant loop (e.g. diameter of section 62a and/or 62b) may be in the range of 0.1 to 0.4, preferably 0.2 to 0.3.

## Claims

1. A reductant delivery system for a SCR system in an internal combustion engine, comprising:
a reductant tank (52) for storing reductant solution;
a dosing valve (54) for dosing reductant solution into the engine's exhaust line, said dosing line being connected to said reductant tank (52) via a feed line (53); and
a coolant loop (60) having an inlet (63) at one end for receiving hot engine coolant and an outlet (65) at the other end for returning said engine coolant; said coolant loop (60) comprising:
flow restrictor means (68) dividing said coolant loop (60) in an upstream, first section (62a) on said inlet side, and a downstream, second section (62b);
a tank loop (64) connected to said coolant loop (60) upstream and downstream of said flow restrictor means (68) and partly located in said reductant tank (52) for thawing frozen reductant solution;
a doser section (66) to carry engine coolant of said second section (62b) and arranged in thermal exchange relationship with said dosing valve (54) for cooling thereof; and
valve means (70; 72; 76; 80) operable to allow or stop the flow of engine coolant through said tank loop (64),
**characterized in that** said doser section (66) is provided downstream of said tank loop (64).

2. The reductant delivery system according to claim 1, wherein said valve means (70; 72; 76; 80) is operable in:
a tank heating mode, wherein engine coolant from said first section (62a) of said coolant loop (60) flows through said tank loop (64) and hence through said reductant tank (52); or
a bypass mode, wherein said tank loop (64) is bypassed by directing the entirety of said engine coolant flow through said flow restrictor (68).

3. The reductant delivery system according to claim 1 or 2, wherein said valve means (70; 72; 76; 80) are arranged in said tank loop (64).

4. The reductant delivery system according to claim 1, 2 or 3, wherein said valve means comprise a two-port valve (70).

5. The reductant delivery system according to claim 1, 2 or 3, wherein said valve means comprise a four-port valve (72) to control the flow of coolant in the in-flow and out-flow sections of the tank loop (64).

6. The reductant delivery system according to claim 1, 2 or 3, wherein said valve means comprise a three-port valve (76) connected on said coolant loop (60) to either direct the flow of engine coolant from said first section (62a) to the second section (62b) through said flow restrictor means (68) or through said tank loop (64).

7. The reductant delivery system according to claim 6, wherein said flow restrictor means (68) is integrated in said three-port valve (76).

8. The reductant delivery system according to claim 1, 2 or 3, wherein said valve means comprise a thermostatic valve (80).

9. The reductant delivery system according to any one of the preceding claims, wherein said flow restrictor means (68) takes the form of an orifice or of a reduced duct portion of said coolant loop (60).

10. The reductant delivery system according to any one of the preceding claims, wherein the dimensions of said coolant loop (60) as well as the position and flow cross-section of said flow restrictor means (68) are designed to provide a desired temperature drop from the inlet of said coolant loop (60) to said dosing valve (54).

11. The reductant delivery system according to any one of the preceding claims, wherein said flow restrictor means (68) has a flow cross section of between 0.1 an 0.4, preferably 0.2 to 0.3, times the flow cross-section through said coolant loop piping (62).

12. The reductant delivery system according to any one of claims 2 to 10, wherein the flow cross-section of said flow restrictor means (68) is designed such that the flow rate through said coolant loop (60) in bypass mode is between 0.1 to 0.3, preferably 0.1 to 0.2, times the flow rate in heating mode.

13. The reductant delivery system according to any one of the preceding claims, wherein said doser section (66) is serially connected with said second section (62b) of the coolant loop (60).

14. The reductant delivery system according to any one of the preceding claims, wherein the feed line (53) runs, at least in part, in close proximity to the coolant loop piping (62), to heat up the feed line.

15. An automotive vehicle having an internal combustion engine comprising an exhaust piping equipped with an SCR catalyst and a reductant delivery system according to any one of the preceding claims; wherein the coolant loop piping (62) of said reductant delivery system extends along the length of the automotive vehicle.

16. The automotive vehicle according to claim 15, wherein the engine is at the front end, and the reductant tank (52) is located towards the rear end of the automotive vehicle, as well as the flow restrictor means (68), so that the engine coolant flows through the first section (62a) of the coolant loop (60) from front to rear, and from rear to the dosing valve (54).

## Patentansprüche

1. Reduktionsmittelliefersystem für ein SCR-System in einem Verbrennungsmotor, das aufweist:
einen Reduktionsmitteltank (52) zum Aufnehmen von Reduktionsmittellösung;
ein Dosierventil (54) zum Dosieren einer Reduktionsmittellösung in die Abgasleitung des Motors, wobei die Dosierleitung über eine Zufuhrleitung (53) mit dem Reduktionsmitteltank (52) verbunden ist; und
einen Kühlmittelkreis (60) mit einem Einlass (63) an einem Ende zum Aufnehmen von heißem Motorkühlmittel und einem Auslass (65) an dem anderen Ende zum Zurückführen des Motorkühlmittels;
wobei der Kühlmittelkreis (60) aufweist:
ein Flussbegrenzungsmittel (68), das den Kühlmittelkreis (60) in einen stromaufwärtigen ersten Abschnitt (62a) auf der Einlassseite und einen stromabwärtigen zweiten Abschnitt (62b) teilt;
einen Tankkreis (64), der mit dem Kühlmittelkreis (60) stromaufwärts und stromabwärts von dem Flussbegrenzungsmittel (68) verbunden ist und teilweise in dem Reduktionsmitteltank (52) angeordnet ist, um gefrorene Reduktionsmittellösung aufzutauen;
einen Dosiererabschnitt (66), um Motorkühlmittel des zweiten Abschnitts (62b) zu führen, und in thermischer Austauschbeziehung mit dem Dosierventil (54) zu dessen Kühlung angeordnet; und
ein Ventilmittel (70; 72; 76; 80), das betriebsfähig ist, um den Fluss von Motorkühlmittel durch den Tankkreis (64) zu ermöglichen oder zu stoppen, **dadurch gekennzeichnet, dass** der Dosiererabschnitt (66) stromabwärts des Tankkreises (64) vorgesehen ist.

2. Das Reduktionsmittelliefersystem gemäß Anspruch 1, wobei das Ventilmittel (70; 72; 76; 80) betriebsfähig ist in:
einem Tankheizmodus, bei dem Motorkühlmittel von dem ersten Abschnitt (62a) des Kühlmittelkreises (60) durch den Tankkreis (64) und somit durch den Reduktionsmitteltank (52) fließt; oder
einem Umgehungsmodus, bei dem der Tankkreis (64) umgangen wird durch Leiten des gesamten Motorkühlmittelflusses durch den Flussbegrenzer (68).

3. Das Reduktionsmittelliefersystem gemäß Anspruch 1 oder 2, wobei das Ventilmittel (70; 72; 76; 80) in dem Tankkreis (64) angeordnet ist.

4. Das Reduktionsmittelliefersystem gemäß Anspruch 1, 2 oder 3, wobei das Ventilmittel ein Zweiwegeventil (70) aufweist.

5. Das Reduktionsmittelliefersystem gemäß Anspruch 1, 2 oder 3, wobei das Ventilmittel ein Vierwegeventil (72) aufweist, um den Kühlmittelfluss in den Einfluss- und Ausflussabschnitten des Tankkreises (64) zu steuern.

6. Das Reduktionsmittelliefersystem gemäß Anspruch 1, 2 oder 3, wobei das Ventilmittel ein Dreiwegeventil (76) aufweist, das mit dem Kühlmittelkreis (60) verbunden ist, um entweder den Fluss von Motorkühlmittel von dem ersten Abschnitt (62a) zu dem zweiten Abschnitt (62b) durch das Flussbegrenzungsmittel (68) oder durch den Tankkreis (64) zu leiten.

7. Das Reduktionsmittelliefersystem gemäß Anspruch 6, wobei das Flussbegrenzungsmittel (68) in dem Dreiwegeventil (76) integriert ist.

8. Das Reduktionsmittelliefersystem gemäß Anspruch 1, 2 oder 3, wobei das Ventilmittel ein Thermostatventil (80) aufweist.

9. Das Reduktionsmittelliefersystem gemäß einem der vorhergehenden Ansprüche, wobei das Flussbegrenzungsmittel (68) die Form einer Öffnung oder eines reduzierten Kanalabschnitts des Kühlmittelkreises (60) hat.

10. Das Reduktionsmittelliefersystem gemäß einem der vorhergehenden Ansprüche, wobei die Dimensionen des Kühlmittelkreises (60) sowie die Position und der Strömungsquerschnitt des Flussbegrenzungsmittels (68) ausgebildet sind zum Vorsehen eines gewünschten Temperaturabfalls von dem Einlass des Kühlmittelkreises (60) zu dem Dosierventil (54).

11. Das Reduktionsmittelliefersystem gemäß einem der vorhergehenden Ansprüche, wobei das Flussbegrenzungsmittel (68) einen Strömungsquerschnitt zwischen 0,1 bis 0,4, vorzugsweise 0,2 bis 0,3, mal dem Strömungsquerschnitt durch die Kühlmittelkreisleitung (62) hat.

12. Das Reduktionsmittelliefersystem gemäß einem der Ansprüche 2 bis 10, wobei der Strömungsquerschnitt des Flussbegrenzungsmittels (68) ausgebildet ist derart, dass die Flussrate durch den Kühlmittelkreis (60) in dem Umgehungsmodus zwischen 0,1 bis 0,3, vorzugsweise 0,1 bis 0,2, mal der Flussrate in dem Heizmodus ist.

13. Das Reduktionsmittelliefersystem gemäß einem der vorhergehenden Ansprüche, wobei der Dosiererabschnitt (66) seriell mit dem zweiten Abschnitt (62b) des Kühlmittelkreises (60) verbunden ist.

14. Das Reduktionsmittelliefersystem gemäß einem der vorhergehenden Ansprüche, wobei die Zufuhrleitung (53) zumindest teilweise in unmittelbarer Nähe zu der Kühlmittelkreisleitung (62) verläuft, um die Zufuhrleitung zu erwärmen.

15. Kraftfahrzeug mit einem Verbrennungsmotor, eine Abgasleitung aufweisend, die mit einem SCR-Katalysator und einem Reduktionsmittelliefersystem gemäß einem der vorhergehenden Ansprüche ausgestattet ist; wobei sich die Kühlmittelkreisleitung (62) des Reduktionsmittelliefersystems entlang der Länge des Fahrzeugs erstreckt.

16. Das Kraftfahrzeug gemäß Anspruch 15, wobei sich der Motor an dem vorderen Ende befindet und der Reduktionsmitteltank (52) zum hinteren Ende des Autos hin angeordnet ist, sowie das Flussbegrenzungsmittel (68), so dass das Motorkühlmittel durch den ersten Abschnitt (62a) des Kühlmittelkreises (60) von vorne nach hinten und von hinten zu dem Dosierventil (54) fließt.

## Revendications

1. Système de distribution de réducteur pour un système de réduction catalytique sélective (RCS) d'un moteur à combustion interne, comprenant :
un réservoir de réducteur (52) pour stocker une solution de réducteur ;
une valve de dosage (54) pour doser la solution de réducteur vers le conduit d'échappement du moteur, ledit conduit de dosage étant connecté audit réservoir de réducteur (56) via une ligne d'amenée (53) ; et
une boucle de réfrigérant (60) ayant une entrée (63) à une extrémité pour recevoir du réfrigérant moteur chaud et une sortie (65) à l'autre extrémité pour retourner ledit réfrigérant moteur ;
I ladite boucle de réfrigérant (60) comprenant :
un moyen de restriction d'écoulement (61) qui divise ladite boucle de réfrigérant (60) en une première section amont (62a) sur ledit côté d'entrée, et en une seconde section aval (62b) ;
une boucle de réservoir (64) connectée à ladite boucle de réfrigérant (60) en amont et en aval dudit moyen de restriction d'écoulement (68) et partiellement situé dans ledit réservoir de réducteur (52) pour faire dégeler une solution de réducteur congelée ;
une section de dosage (76) pour transporter du réfrigérant moteur de ladite seconde section (62b) et agencée en relation d'échange thermique avec ladite valve de dosage (54) pour le refroidissement de celle-ci ; et
des moyens formant valve (70 ; 72 ; 76 ; 80) dont la fonction est de permettre d'arrêter l'écoulement de réfrigérant moteur à travers ladite boucle de réservoir (64),
**caractérisé en ce que** ladite section de dosage (66) est prévue en aval de ladite boucle de réservoir (64).

2. Système de distribution de réducteur selon la revendication 1, dans lequel lesdits moyens formant valve (70 ; 72 ; 76 ; 80) sont capables de fonctionner :
dans un mode de chauffage de réservoir, dans lequel le réfrigérant moteur provenant de ladite première section (62a) de ladite boucle de réfrigérant (60) s'écoule à travers ladite boucle de réservoir (64) et par conséquent à travers ledit réservoir de réducteur (52) ; ou
dans un mode de by-pass dans lequel ladite boucle de réservoir (64) est bypassée en dirigeant la totalité de l'écoulement dudit réfrigérant moteur à travers ladite restriction d'écoulement (68).

3. Système de distribution de réducteur selon la revendication 1 ou 2, dans lequel lesdits moyens formant valve (70 ; 72 ; 76 ; 80) sont agencés dans ladite boucle de réservoir (64).

4. Système de distribution de réducteur selon la revendication 1, 2 ou 3, dans lequel lesdits moyens formant valve comprennent une valve à deux orifices (70).

5. Système de distribution de réducteur selon la revendication 1, 2 ou 3, dans lequel lesdits moyens formant valve comprennent une valve à quatre orifices (72) pour commander l'écoulement de réfrigérant dans la section d'écoulement entrant et la section d'écoulement sortant de la boucle de réservoir (64).

6. Système de distribution de réducteur selon la revendication 1, 2 ou 3, dans lequel lesdits moyens formant valve comprennent une valve à trois orifices (76) connectée sur ladite boucle de réfrigérant (60) destinée à diriger l'écoulement du réfrigérant moteur depuis ladite première section (62a) vers la seconde section (62b) soit via ledit moyen formant restriction d'écoulement (61), soit via ladite boucle de réservoir (64).

7. Système de distribution de réducteur selon la revendication 6, dans lequel ledit moyen formant restriction d'écoulement (68) est intégré dans ladite valve à trois orifices (76).

8. Système de distribution de réducteur selon la revendication 1, 2 ou 3, dans lequel lesdits moyens formant valve comprennent une valve thermostatique (80).

9. Système de distribution de réducteur selon l'une quelconque des revendications précédentes, dans lequel lesdits moyens formant restriction d'écoulement (68) adoptent la forme d'un orifice ou d'une portion de conduit réduite de ladite boucle de réfrigérant (60).

10. Système de distribution de réducteur selon l'une quelconque des revendications précédentes, dans lequel les dimensions de ladite boucle de réfrigérant (60) ainsi que la position et la section transversale d'écoulement dudit moyen formant restriction d'écoulement (61) sont conçues pour assurer une chute de température désirée depuis l'entrée de ladite boucle de réfrigérant (60) vers ladite valve de dosage (54).

11. Système de distribution de réducteur selon l'une quelconque des revendications précédentes, dans lequel ledit moyen formant restriction d'écoulement (61) a une section transversale écoulement entre 0,1 et 0,4, de préférence de 0,2 à 0,3 fois la section transversale d'écoulement à travers ledit tube de la boucle de réfrigérant (62).

12. Système de distribution de réducteur selon l'une quelconque des revendications 2 à 10, dans lequel la section transversale d'écoulement dudit moyen formant restriction d'écoulement (61) est conçue de telle façon que le débit à travers ladite boucle de réfrigérant (60) dans le mode de by-pass est entre 0,1 et 0,3, de préférence 0,1 et 0,2 fois le débit dans le mode de chauffage.

13. Système de distribution de réducteur selon l'une quelconque des revendications précédentes, dans lequel ladite section de dosage (66) est connectée en série avec ladite seconde section (62b) de la boucle de réfrigérant (60).

14. Système de distribution de réducteur selon l'une quelconque des revendications précédentes, dans lequel le conduit d'amenée (53) passe, au moins en partie, à proximité étroite du tube de la boucle de réfrigérant (62), afin de faire chauffer le conduit d'amenée.

15. Véhicule automobile ayant un moteur à combustion interne comprenant une tubulure d'échappement équipée d'un système à réduction catalytique sélective et avec distribution de réducteur selon l'une quelconque des revendications précédentes ; dans lequel le tube de la boucle de réfrigérant (62) dudit système de distribution de réducteur s'étend le long de la longueur du véhicule automobile.

16. Véhicule automobile selon la revendication 15, dans lequel le moteur est à l'extrémité avant, et le réservoir de réducteur (52) est situé vers l'extrémité arrière du véhicule automobile, ainsi que le moyen formant restriction d'écoulement (68), de sorte que le réfrigérant moteur s'écoule à travers la première section (62a) de la boucle de réfrigérant (60) depuis l'avant vers l'arrière, et depuis l'arrière vers la valve de dosage (54).
